# EUROPÄISCHE PATENTSCHRIFT

(11) **EP 3 225 864 B1**
(45) Veröffentlichungstag und Bekanntmachung des Hinweises auf die Patenterteilung: **24.07.2019**
(21) Anmeldenummer: 17160754.2
(22) Anmeldetag: 14.03.2017
(51) Int. Cl.: F16C 35/077, F16C 33/58, F16C 35/067

(54) **WÄLZLAGER, WÄLZLAGERANORDNUNG UND VERFAHREN ZU DESSEN MONTAGE**
ROLLING BEARING, ROLLING BEARING ASSEMBLY AND METHOD FOR MOUNTING SAME
PALIER À ROULEMENT, SYSTÈME DE PALIER À ROULEMENT ET SON PROCÉDÉ DE MONTAGE

(30) Priorität: 24.03.2016 DE 102016105623
(43) Veröffentlichungstag der Anmeldung: 04.10.2017
(73) Patentinhaber: Magna PT B.V. & Co. KG, 74199 Untergruppenbach (DE)
(72) Erfinder: Braun, Heiko, 74360 Ilsfeld (DE)
(74) Vertreter: Rausch, Gabriele

(56) Entgegenhaltungen:
- DE-C- 676 233
- DE-T5-112010 001 913
- FR-A1- 2 897 127
- JP-U- S5 059 450
- JP-Y1- S4 531 444
- JP-Y1- S4 831 131
- US-H- H 242
- SERAFIN J S: "ANTI-ROTATION FEATURE ON BEARINGS", XEROX DISCLOSURE JOURNAL, XEROX CORPORATION. STAMFORD, CONN, US, Bd. 23, Nr. 5, 1. September 1998 (1998-09-01), Seite 231/232, XP000800563,

## Beschreibung

Die vorliegende Erfindung betrifft ein Wälzlager mit einem ersten Ringelement, mit einem konzentrisch zu dem ersten Ringelement angeordneten zweiten Ringelement, und mit einer Mehrzahl von zwischen dem ersten und dem zweiten Ringelement angeordneten Wälzkörpern, wobei wenigstens eines der Ringelemente eine Umfangsnut zur Aufnahme eines Axialsicherungsringes aufweist.

Ferner betrifft die vorliegende Erfindung eine Wälzlageranordnung mit einem Wälzlager der oben beschriebenen Art und mit einem Axialsicherungsring, der in einer Sicherungsstellung in die Umfangsnut des einen Ringelementes eingesetzt ist, wobei der Axialsicherungsring ein offener Ring ist, der aus der Sicherungsstellung in eine Spreizstellung spreizbar ist.

Schließlich betrifft die vorliegende Erfindung ein Verfahren zum Montieren einer Wälzlageranordnung, mit den Schritten, einen Axialsicherungsring in einer Lagersitznut eines Lagersitzes eines Gehäuseabschnittes zu montieren, und ferner ein Wälzlager der oben beschriebenen Art an dem Lagersitz zu montieren, indem der Axialsicherungsring gespreizt wird und das eine Ringelement, an dem die Umfangsnut ausgebildet ist, in den Lagersitz eingeschoben wird, bis die Umfangsnut mit dem Axialsicherungsring ausgerichtet ist, und indem der Axialsicherungsring anschließend entspreizt wird, so dass er in die Umfangsnut greift.

Wälzlageranordnungen der oben beschriebenen Art sowie ein zugeordnetes Montageverfahren sind bekannt aus dem Dokument DE 10 2014 107 370 A1.

In diesem Dokument wird ferner vorgeschlagen, dass an dem Ringelement und/oder an einer Einsetzöffnung des Lagersitzes eine Fase ausgebildet ist, so dass der Axialsicherungsring beim Einsetzen des Ringelementes in den Lagersitz mittels der Fase spreizbar ist.

Ferner ist vorgesehen, dass der Axialsicherungsring ein offener Ring ist, der an seinen Umfangsenden Radialvorsprünge aufweist, die vorzugsweise in eine Montageöffnung des Gehäuseabschnittes greifen, um den Axialsicherungsring zum Zwecke der Demontage des Wälzlagers spreizen zu können.

Ferner offenbart das Dokument DE 10 2013 003 111 A1 ein Getriebegehäuse und ein Verfahren zu dessen Herstellung, wobei ein Wälzlager über eine Ringmutter axial in Bezug auf einen Gehäuseabschnitt fixiert wird.

Das Dokument DE 10 2012 019 965 A1 offenbart eine Spreizvorrichtung, die in eine Montageöffnung eines Gehäuseabschnittes eingeführt werden kann, um Radialvorsprünge eines offenen Axialsicherungsringes in tangentialer Richtung voneinander weg zu bewegen, um den Axialsicherungsring zu spreizen.

Schließlich offenbart das Dokument EP 2 913 540 A2 einen Axialsicherungsring, dessen Radialvorsprünge durch Biegen gegenüber dem Ringabschnitt hergestellt sind, wobei eine radiale Tiefe einer Lagersitz-Radialnut über den Umfang so gewählt ist, dass der Axialsicherungsring bei seiner Spreizung zum Zwecke der Montage oder Demontage vollständig in der Lagersitz-Radialnut aufgenommen werden kann.

Sobald das eine Ringelement in den Lagersitz der oben beschriebenen Wälzlageranordnungen eingesetzt wird, so ist dafür zu sorgen, dass das Ringelement sich nicht relativ zu dem Gehäuseabschnitt des Lagersitzes verdreht. Hierzu ist es im Stand der Technik bekannt, einen Formschluss zwischen Ringelement und Gehäuseabschnitt zu realisieren, beispielsweise mittels eines Passstiftes, eines Federstiftes oder einer Kugel/Federanordnung. Eine andere Art der Verdrehsicherung ist aus Dokument DE 11 2010 001913 T5 bekannt. Dieses Dokument zeigt den Oberbegriff des Anspruchs 1.

Eine weitere Möglichkeit darin, eine Verdrehsicherung zwischen dem Ringelement und dem Gehäuseabschnitt einzurichten, besteht in der Bereitstellung eines Presssitzes bzw. einer Pressüberdeckung vom Ringelement hin zu dem Lagersitz des Gehäuses.

Ein Formschluss der oben beschriebenen Art verlangt nach einer exakt in Umfangsrichtung orientierten Montage des Ringelementes zu dem Gehäuse. Ein Presssitz bzw. eine Pressüberdeckung ist in solchen Fällen nicht realisierbar, wenn das Wälzlager zunächst mittels des anderen Ringelementes an einem verdrehbaren Element montiert wird (also wenn beispielsweise ein Innenring eines Wälzlagers zunächst an einer Welle montiert wird), und wenn erst anschließend das axiale Einsetzen des einen Ringelementes in den Lagersitz des Gehäuseabschnittes erfolgt.

Vor diesem Hintergrund ist es eine Aufgabe der Erfindung, ein verbessertes Wälzlager, eine verbesserte Wälzlageranordnung sowie ein verbessertes Verfahren zum Montieren einer Wälzlageranordnung anzugeben, wobei die Montage einfach realisiert werden soll und wobei eine Verdrehsicherung auf konstruktiv einfache Weise eingerichtet werden kann, und wobei es insbesondere nicht erforderlich ist, dass das Ringelement in einer vorbestimmten Drehposition relativ zu dem Lagersitz montiert wird.

Die obige Aufgabe wird bei dem eingangs genannten Wälzlager dadurch gelöst, dass ein Umfangsnut-Tangentialsicherungsmerkmal im Bereich der Umfangsnut angeordnet und dazu ausgebildet ist, mit einem Axialsicherungsring-Tangentialsicherungsmerkmal eines in die Umfangsnut eingesetzten Axialsicherungsringes in Eingriff zu treten, um das eine Ringelement in Umfangsrichtung gegenüber dem Axialsicherungsring zu sichern.

Ferner wird die obige Aufgabe gelöst durch eine Wälzlageranordnung mit einem erfindungsgemäßen Wälzlager und mit einem Axialsicherungsring, der ein Axialsicherungsring-Tangentialsicherungsmerkmal aufweist, das in der Sicherungsstellung mit dem Umfangsnut-Tangentialsicherungsmerkmal in Eingriff tritt.

Schließlich wird die obige Aufgabe gelöst durch ein Verfahren zum Montieren einer Wälzlageranordnung, insbesondere einer Wälzlageranordnung der erfindungsgemäßen Art, mit den Schritten, einen Axialsicherungsring, der ein Axialsicherungsring-Tangentialsicherungsmerkmal aufweist, in einer Lagersitznut eines Lagersitzes eines Gehäuseabschnittes zu montieren, und anschließend ein Wälzlager der erfindungsgemäßen Art an dem Lagersitz zu montieren, indem der Axialsicherungsring gespreizt wird und das eine Ringelement, an dem die Umfangsnut ausgebildet ist, in oder auf den Lagersitz eingeschoben wird, bis die Umfangsnut mit dem Axialsicherungsring ausgerichtet ist, und indem der Axialsicherungsring anschließend entspreizt wird, so dass er in die Umfangsnut greift, wobei ein Umfangsnut-Tangentialsicherungsmerkmal im Bereich der Umfangsnut mit dem Axialsicherungsring-Tangentialsicherungsmerkmal des in die Umfangsnut eingreifenden Axialsicherungsringes in Eingriff tritt, um das eine Ringelement in Umfangsrichtung gegenüber dem Axialsicherungsring zu sichern.

Mit der vorliegenden Erfindung kann eine Verdrehsicherung für das Wälzlager in Bezug auf den Gehäuseabschnitt realisiert werden, die auf einer Verdrehsicherung bzw. Tangentialsicherung zwischen dem Ringelement des Wälzlagers und einem Axialsicherungsring beruht. Die Verdrehsicherung ist folglich eine mittelbare Verdrehsicherung. Bei der Erfindung wird vorzugsweise davon ausgegangen, dass der Axialsicherungsring gegenüber dem Gehäuseabschnitt in Drehrichtung bzw. in Tangentialrichtung gesichert ist. Dies ist insbesondere bei solchen Axialsicherungsringen der Fall, die als offene Ringe mit Radialvorsprüngen bzw. Laschen an den Umfangsenden ausgebildet sind, wobei die Radialvorsprünge in Dreh- bzw. Tangentialrichtung in der Regel an einem radialen Gehäuseabschnitt angreifen, der in diesem Fall als eine Art Drehanschlag dient.

Die Einrichtung einer Tangentialsicherung bzw. Verdrehsicherung zwischen Ringelement des Wälzlagers und Axialsicherungsring hat zudem den Vorteil, dass eine Montage des Ringelementes in einer vorbestimmten Drehposition in Bezug auf den Lagersitz des Gehäuseabschnittes vorzugsweise nicht erforderlich ist.

Sofern der Axialsicherungsring nach der Montage in die Umfangsnut des Ringelementes greift, um das Ringelement axial zu sichern, kann es sein, dass das Umfangsnut-Tangentialsicherungsmerkmal und das Axialsicherungsring-Tangentialsicherungsmerkmal in Umfangsrichtung nicht miteinander ausgerichtet sind, so dass zunächst noch keine Tangentialsicherung bzw. Verdrehsicherung eingerichtet ist. Sobald eine Verdrehung zwischen dem Ringelement und dem Gehäuseabschnitt aufgrund von Umfangskräften während des Betriebes einsetzt, kann das Ringelement sich relativ zu dem Gehäuseabschnitt so lange verdrehen, bis vorzugsweise die folgenden zwei Bedingungen erfolgt sind. Zum einen ist der Axialsicherungsring in Umfangsrichtung gegenüber dem Gehäuseabschnitt festgelegt, wobei vorzugsweise ein Radialvorsprung hiervon gegen einen radial ausgerichteten Drehanschlag des Gehäuseabschnittes anliegt. Zum zweiten ist das Umfangsnut-Tangentialsicherungsmerkmal mit dem Axialsicherungsring-Tangentialsicherungsmerkmal in Eingriff getreten. Folglich kann sich das Ringelement aus einer Drehposition, in der die Tangentialsicherungsmerkmale nicht in Eingriff sind, maximal bis zu 360° relativ zu dem Gehäuseabschnitt bewegen, bis diese Tangentialsicherungsmerkmale in Eingriff getreten sind.

Eine derartige - insbesondere einmalige - Verdrehung des Ringelementes in Bezug auf den Gehäuseabschnitt ist jedoch unproblematisch, da dies nicht zu einem Verschleiß führt, wie er insbesondere bei einem dauerhaften "Kriechen" eines Ringelementes in Bezug auf den zugeordneten Lagersitz während des Betriebes der Wälzlageranordnung auftreten kann.

Ferner wird davon ausgegangen, dass die Ringelemente des Wälzlagers im Betrieb der Wälzlageranordnung eine vorbestimmte bevorzugte relative Verdrehrichtung haben. In dieser bevorzugten relativen Verdrehrichtung liegt vorzugsweise einer von zwei Radialvorsprüngen des Axialsicherungsringes in Bezug auf einen Dreh- bzw. Tangentialanschlag des Gehäuseabschnittes an. Der andere Radialvorsprung ist hierbei in der Regel nach wie vor in Umfangsrichtung beweglich. In der bevorzugten relativen Verdrehrichtung der Ringelemente verändert sich folglich die Umfangsposition des Axialsicherungsringes relativ zu dem Gehäuseabschnitt nicht, so dass auch das Ringelement während dieser Betriebsweise keine relative Verdrehung in Bezug auf den Gehäuseabschnitt mehr erfährt.

Bei einer Umkehrung der Drehrichtung kann es sein, dass der Axialsicherungsring innerhalb einer Montageöffnung "umschlägt", so dass der andere Radialvorsprung an einem in Umfangsrichtung gegenüberliegenden Drehanschlag des Gehäuseabschnittes anschlägt.

Da in der Praxis davon auszugehen ist, dass derartige Drehrichtungsumkehrmaßnahmen nur relativ selten vorkommen, insbesondere dann, wenn die erfindungsgemäße Wälzlageranordnung vorzugsweise in einem Kraftfahrzeuggetriebe verbaut ist, ist der hierdurch ggf. hervorgerufene Verschleiß zwischen Ringelement und Lagersitz ebenfalls vernachlässig bar.

Das Umfangsnut-Tangentialsicherungsmerkmal erstreckt sich vorzugsweise über einen Winkelbereich von kleiner 45°, insbesondere kleiner 15°, insbesondere kleiner 10° und vorzugsweise kleiner 5°.

Das Umfangsnut-Tangentialsicherungsmerkmal liegt vorzugsweise innerhalb der Umfangsnut, ragt folglich vorzugsweise nicht über diese hinaus Die Begriffe "tangential" und "in Drehrichtung" bzw. "in Umfangsrichtung" sind vorliegend in gleicher Weise zu verstehen. Eine Tangentialsicherung kann eine Sicherung gegen ein Verdrehen in einer ersten - positiven - Drehrichtung und/oder eine Sicherung gegen ein Verdrehen in einer entgegengesetzten zweiten - negativen - Drehrichtung sein.

Die Aufgabe wird somit vollkommen gelöst.

Das Umfangsnut-Tangentialsicherungsmerkmal weist wenigstens ein Tangentialsicherungselement auf, das einen Verankerungsabschnitt aufweist, der in eine Tangentialsicherungs-Vertiefung greift, die an dem einen Ringelement im Bereich der Umfangsnut ausgebildet ist.

Generell ist es möglich, dass das Umfangsnut-Tangentialsicherungsmerkmal einstückig mit dem einen Ringelement ausgebildet ist. Fertigungstechnisch ist es jedoch einfacher, im Bereich einer Umfangsnut eine Tangentialsicherungs-Vertiefung auszubilden, in die dann ein Tangentialsicherungselement mit seinem Verankerungsabschnitt eingesetzt ist.

Das Tangentialsicherungselement kann in die Tangentialsicherungs-Vertiefung auf beliebige Art und Weise eingesetzt werden, insbesondere darin festgelegt werden. Ein Festlegen in der Tangentialsicherungs-Vertiefung kann durch ein Clipsen erfolgen, durch Kleben, durch Schweißen oder durch andere Fügeverfahren.

Das Tangentialsicherungselement kann aus einem Metall hergestellt sein. Das Tangentialsicherungselement kann durch eine Kugel gebildet sein, kann durch einen Stab gebildet sein, dessen Längsachse sich vorzugsweise parallel zu einer Längsachse des Ringelementes erstreckt, kann jedoch auch durch ein polyedrisches Bauelement oder dergleichen gebildet sein.

Die Tangentialsicherungs-Vertiefung ist vorzugsweise eine Vertiefung, die in einem Bodenbereich der Umfangsnut ausgebildet ist, obgleich die Tangentialsicherungs-Vertiefung auch in einem Wandbereich der Umfangsnut ausgebildet sein kann.

Das Tangentialsicherungselement weist einen Sicherungsabschnitt auf, der dazu ausgebildet ist, in eine Radialvertiefung eines in die Umfangsnut eingesetzten Axialsicherungsringes einzugreifen.

Der Sicherungsabschnitt steht vorzugsweise in radialer Richtung gegenüber einem Boden der Umfangsnut vor. Es handelt sich bei dem Sicherungsabschnitt um jenen Teil des Tangentialsicherungselementes, der nicht in die Tangentialsicherungs-Vertiefung greift.

Der Sicherungsabschnitt erstreckt sich ausgehend von der Tangentialsicherungs-Vertiefung vorzugsweise in radialer Richtung, wobei die radiale Erstreckung vorzugsweise nicht über einen Außenumfang der Umfangsnut hinausreicht.

Die Radialvertiefung des Axialsicherungsringes ist vorzugsweise in Umfangsrichtung mit einer vergleichbaren Abmessung ausgebildet wie das Tangentialsicherungselement bzw. die Tangentialsicherungs-Vertiefung.

Der Axialsicherungsring weist ein Axialsicherungsring-Tangentialsicherungsmerkmal in Form wenigstens einer Radialvertiefung auf, in die ein Sicherungsabschnitt eines Tangentialsicherungselementes greift, wenn der Axialsicherungsring in die Umfangsnut eingesetzt ist.

Die Radialvertiefung bildet bei dieser Ausführungsform das Axialsicherungsring-Tangentialsicherungsmerkmal und ist vorzugsweise eine Radialvertiefung, die sich im Bereich eines Umfangsabschnittes des Axialsicherungsringes befindet, der dem Boden der Umfangsnut in radialer Richtung gesehen gegenüberliegt.

Generell ist der Axialsicherungsring spreizbar, indem seine Umfangsenden in tangentialer und/oder radialer Richtung voneinander weg bewegt werden, um den Axialsicherungsring aufzuspreizen. In manchen Varianten kann der Axialsicherungsring jedoch auch in eine Spreizstellung gebracht werden, indem die Umfangsenden des Axialsicherungsrings in Umfangsrichtung aufeinander zu bewegt werden.

Ferner ist es vorteilhaft, wenn das Axialsicherungsring-Tangentialsicherungsmerkmal des Axialsicherungsrings in der Spreizstellung außer Eingriff mit dem Umfangsnut-Tangentialsicherungsmerkmal ist.

Mit anderen Worten kann die Tangential- bzw. Verdrehsicherung durch Spreizen des Axialsicherungsringes in die Spreizstellung aufgehoben werden.

Ferner ist es vorteilhaft, wenn der Axialsicherungsring an seinen Umfangsenden Radialvorsprünge aufweist.

Die Radialvorsprünge können dazu dienen, um die Umfangsenden des Axialsicherungsringes leichter relativ zueinander bewegen zu können, wenn ein Spreizvorgang stattfinden soll.

Ferner können die Radialvorsprünge vorteilhafterweise dazu dienen, um die relative Drehlage des Axialsicherungsringes in Bezug auf einen Gehäuseabschnitt zu fixieren oder wenigstens zu begrenzen. Mit anderen Worten können die Radialvorsprünge innerhalb einer Montageöffnung an radiale Drehanschläge anschlagen, so dass die relative Verdrehbarkeit des Axialsicherungsringes in Bezug auf den Gehäuseabschnitt auf Winkelbereiche von kleiner 90° beschränkt ist, insbesondere kleiner 45°.

In einer bevorzugten Drehrichtung des Wälzlagers liegt einer der Radialvorsprünge folglich vorzugsweise an einem Drehanschlag eines Gehäuseabschnittes an.

Ferner ist es vorteilhaft, wenn das Axialsicherungsring-Tangentialsicherungsmerkmal in Umfangsrichtung von einem der Umfangsenden um einen Abstandswinkel beabstandet ist, der kleiner ist als 30°, insbesondere kleiner ist als 20°, insbesondere kleiner als 12°.

Hierdurch können Relativkräfte zwischen Ringelement und Axialsicherungsring in Umfangsrichtung vorzugsweise in räumlicher Nähe zu einem der Umfangsenden mittels der Tangentialsicherungsmerkmale aufgenommen werden, wobei die relative Drehlage zwischen Axialsicherungsring und Gehäuseabschnitt vorzugsweise durch einen Radialvorsprung im Bereich des Umfangsendes bestimmt wird, also ebenfalls in räumlicher Nähe zu dem Axialsicherungsring-Tangentialsicherungsmerkmal. Folglich kann vorzugsweise die Gefahr verringert werden, dass sich die Verdrehsicherung mittels des Axialsicherungsring-Tangentialsicherungsmerkmals aufgrund von Aufbiegungen entfernt von dem Umfangsende löst.

Gemäß einer weiteren bevorzugten Ausführungsform der Wälzlageranordnung ist das eine Ringelement, an dem die Umfangsnut ausgebildet ist, in einen oder auf einen vorzugsweise zylindrischen Lagersitz eines Gehäuseabschnittes axial geschoben, wobei der Axialsicherungsring in der Sicherungsstellung radial in eine Lagersitznut greift, die als Radialnut an dem Lagersitz ausgebildet ist.

In der Sicherungsstellung greift der Axialsicherungsring folglich sowohl in die Lagersitznut, die dem Gehäuseabschnitt zugeordnet ist, als auch in die Umfangsnut, die dem Ringelement des Wälzlagers zugeordnet ist, so dass diese Bauelemente axial gegeneinander gesichert werden.

Dabei ist es von besonderem Vorzug, wenn der Axialsicherungsring wenigstens einen Radialvorsprung aufweist, der in eine Montageöffnung des Gehäuseabschnittes ragt und innerhalb der Montageöffnung begrenzt tangential bewegbar ist.

Die begrenzte tangentiale Bewegbarkeit dient insbesondere zum Spreizen des Axialsicherungsringes, indem auf die Radialvorsprünge in der Montageöffnung zugegriffen wird, beispielsweise mittels einer Spreizanordnung, wie sie aus dem Dokument DE 10 2012 019 965 A1 bekannt geworden ist. Ferner ist eine derartige Montageöffnung in dem Dokument DE 10 2014 107 370 A1 im Detail beschrieben. Auf die Offenbarung dieser Dokumente wird daher ergänzend Bezug genommen.

Die Erfindung liefert insgesamt wenigstens einen der folgenden Vorteile. Mittels der beschriebenen Tangentialsicherungsmerkmale kann eine formschlüssige Verbindung in Umfangsrichtung bzw. in Tangentialrichtung zwischen dem Ringelement und dem Gehäuseabschnitt eingerichtet werden, wobei es jedoch nicht zwingend notwendig ist, diese Elemente in einer vorbestimmten Drehposition zueinander zu montieren.

Während in einer bevorzugten Variante das Umfangsnut-Tangentialsicherungsmerkmal ein Tangentialsicherungselement in der Umfangsnut beinhaltet, kann das Tangentialsicherungselement auch durch einen Radialsteg innerhalb der Umfangsnut gebildet sein. Im letzteren Fall würde die Umfangsnut vorzugsweise gefräst und nicht gedreht werden.

Anstelle einer Radialvertiefung bzw. einer Kerbe in dem Axialsicherungsring könnte ggf. eine Verprägung in einem Umfangsbereich des Axialsicherungsringes als Axialsicherungsring-Tangentialsicherungsmerkmal verwendet werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine Ausführungsform einer erfindungsgemäßen Wälzlageranordnung;
- Fig. 2: eine axiale Draufsicht auf einen Axialsicherungsring einer erfindungsgemäßen Wälzlageranordnung;
- Fig. 3: eine teilweise weggeschnittene Radialansicht auf eine weitere Ausführungsform einer Wälzlageranordnung, die den Axialsicherungsring der Fig. 2 verwendet;
- Fig. 4: eine teilweise weggeschnittene axiale Draufsicht auf die Wälzlageranordnung der Fig. 3;
- Fig. 5: eine teilweise weggeschnittene radiale Ansicht des einen Ringelementes eines erfindungsgemäßen Wälzlagers mit einer Darstellung einer Tangentialsicherungs-Vertiefung; und
- Fig. 6: das Ringelement der Fig. 5 mit einem in die Tangentialsicherungs-Vertiefung eingesetzten Tangentialsicherungselement.

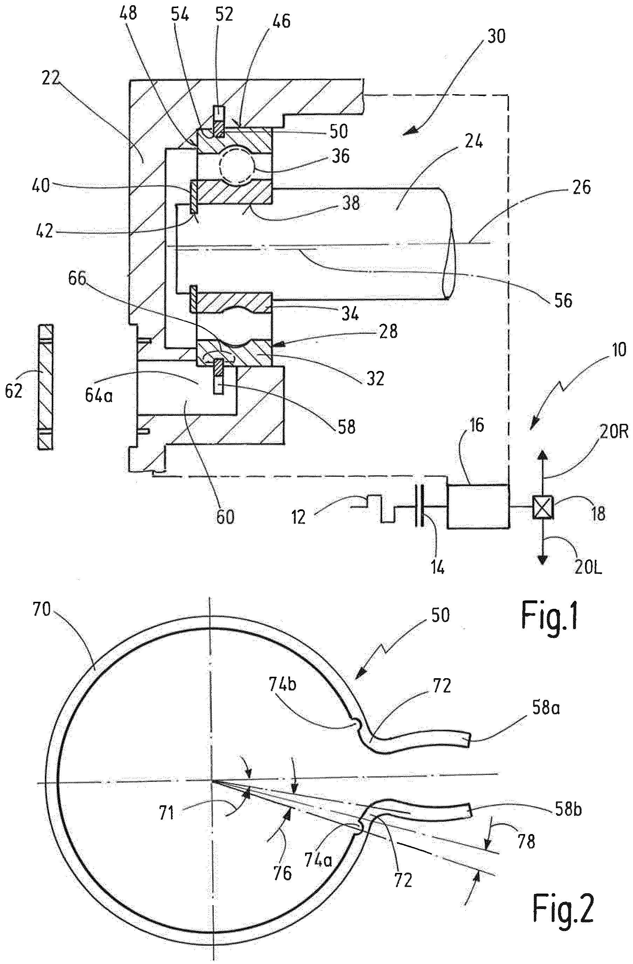

In Fig. 1 ist ein Antriebsstrang für ein Kraftfahrzeug schematisch dargestellt und generell mit 10 bezeichnet. Der Antriebsstrang 10 weist einen Antriebsmotor 12 auf, der beispielsweise als Verbrennungsmotor ausgebildet sein kann. Eine Antriebswelle des Antriebsmotors 12 ist mit einem Eingang einer Kupplungsanordnung 14 verbunden, deren Ausgang mit dem Eingang einer Getriebeanordnung 16 verbunden ist. Ein Ausgang der Getriebeanordnung 16 ist mit einem Differential 18 verbunden, mittels dessen Antriebsleistung auf angetriebene Räder 20L, 20R verteilbar ist.

Die Getriebeanordnung 16 kann ein manuelles Schaltgetriebe sein, ein Doppelkupplungsgetriebe, ein Wandlerautomatikgetriebe oder eine andere Art von Getriebe. Die Getriebeanordnung 16 beinhaltet einen Gehäuseabschnitt 22. Ferner beinhaltet die Getriebeanordnung 16 eine Welle 24, die entlang einer Wellenachse 26 ausgerichtet ist und mittels eines Wälzlagers 28 drehbar in Bezug auf den Gehäuseabschnitt 22 gelagert ist.

Der Gehäuseabschnitt 22, die Welle 24 und das Wälzlager 28 bilden einen Teil einer Wellenlageranordnung 30.

Das Wälzlager 28 beinhaltet einen Außenring 32, der ein erstes Ringelement darstellt. Ferner weist das Wälzlager 28 einen Innenring 34 auf, der ein zweites Ringelement darstellt. Zwischen dem Außenring 32 und dem Innenring 34 ist eine Mehrzahl von Wälzkörpern 36 gelagert, derart, dass der Außenring 32 und der Innenring 34 relativ zueinander bei geringer Reibung verdrehbar sind.

Der Innenring 34 ist an einem Innenringsitz 38 der Welle 24 festgelegt und mittels einer Innenringsicherung 40 axial gelagert. Der Innenring 34 kann dabei beispielsweise gegen einen nicht näher bezeichneten Axialanschlag der Welle 24 anstoßen und auf der Seite des freien Endes der Welle 24 mittels eines Axialsicherungsringes 40 gesichert sein, der in eine Wellennut 42 in der Welle 24 eingreift.

Der Außenring 32 ist mit seinem Außenumfang in Bezug auf einen Lagersitz 46 der Gehäuseanordnung 22 festgelegt. Der Außenring 32 wird axial in den Lagersitz 46 eingeschoben, bis der Außenring 32 an einer Gehäuseschulter 48 anschlägt.

Die Wälzlageranordnung 30 weist ferner einen Axialsicherungsring 50 auf. Dem Axialsicherungsring 50 sind eine Lagersitznut 52 in Form einer Radialnut in dem Lagersitz 46 sowie eine Umfangsnut 54 in Form einer gegenüberliegenden Radialnut an dem Außenumfang des Außenrings 32 zugeordnet.

Die Lagersitznut 52 ist dabei so ausgebildet, dass sich der Axialsicherungsring 50, der insbesondere als offener Ring ausgebildet ist, so weit aufspreizen lässt, bis er den Lagersitz 46 derart freigibt, dass der Außenring 32 bis gegen die Gehäuseschulter 48 geschoben werden kann und der Axialsicherungsring 50 mit der Umfangsnut 54 ausgerichtet ist. Nachfolgend kann der Axialsicherungsring 50 wieder entspreizt werden, derart, dass er nach wie vor teilweise in der Lagersitznut 52 liegt, jedoch auch in der Umfangsnut 54, um auf diese Weise den Außenring 32 axial in Bezug auf den Gehäuseabschnitt 22 zu sichern.

Der Axialsicherungsring 50 ist, wie gesagt, als offener Ring ausgebildet, der an seinen Umfangsenden vorzugsweise Radialvorsprünge bzw. Laschen aufweist. Das Spreizen erfolgt, indem die Radialvorsprünge voneinander weg bewegt werden, wodurch sich der Axialsicherungsring 50 im Wesentlichen radial aufweitet, und zwar um eine Spreizachse 56, die parallel versetzt zu der Wellenachse 26 ausgerichtet sein kann.

Ein Radialvorsprung des Axialsicherungsringes 50 ist in Fig. 1 schematisch bei 58 gezeigt.

Ferner ist in Fig. 1 dargestellt, dass der Gehäuseabschnitt 22 eine von außerhalb des Gehäuseabschnittes 22 zugängliche Montageöffnung 60 aufweist, in die der Radialvorsprung 58 hineinragt. Die Montageöffnung 60 ist mittels eines Deckels 62 verschließbar. Die Montageöffnung 60 ist in Umfangsrichtung begrenzt und bildet folglich wenigstens einen Anschlag 64a für den Radialvorsprung 58, so dass der Radialvorsprung 58 (oder die Radialvorsprünge 58) in Umfangsrichtung begrenzt beweglich in Bezug auf den Gehäuseabschnitt 22 ist.

Zum Spreizen des Axialsicherungsringes (beispielsweise zum Zwecke der Demontage des Wälzlagers 28 oder auch zur Montage) kann folglich vorzugsweise auf zwei Radialvorsprünge 58 zugegriffen werden, und zwar über die Montageöffnung 60, um auf diese Weise den Axialsicherungsring 50 vollständig in der Lagersitznut 52 aufzunehmen und den Lagersitz 46 freizugeben.

Eine Wälzlageranordnung der oben beschriebenen Art ist ferner bekannt aus dem Dokument DE 10 2014 107 370 A1, auf dessen Offenbarung vorliegend ergänzend Bezug genommen wird.

Vorliegend beinhaltet die Wälzlageranordnung 30 erfindungsgemäß eine Tangentialsicherung 66, die dazu dient, eine Relatiwerdrehung von Axialsicherungsring 50 und Außenring 32 zu verhindern. Die Tangentialsicherung 66 ist in Fig. 1 lediglich schematisch angedeutet, ist jedoch insbesondere durch ein Umfangsnut-Tangentialsicherungsmerkmal im Bereich der Umfangsnut gebildet, das mit einem Axialsicherungsring-Tangentialsicherungsmerkmal des Axialsicherungsringes 50 in Eingriff tritt, um den Außenring 32 in Dreh- bzw. Umfangsrichtung gegenüber dem Axialsicherungsring 50 zu sichern.

Der Axialsicherungsring 50 ist dabei in Umfangsrichtung bei einer vorgegebenen Drehrichtung ebenfalls tangential gegenüber dem Gehäuseabschnitt 22 gesichert, da in der bevorzugten Drehrichtung ein Radialvorsprung an einem zugeordneten Anschlag 64 anschlägt. Folglich dient die Tangentialsicherung 66 mittelbar auch dazu, den Außenring 32 in Bezug auf den Gehäuseabschnitt 22 tangential, also gegenüber einer Verdrehung zu sichern.

Die Tangentialsicherung 66 ist insbesondere eine formschlüssige Tangentialsicherung. Bei der Montage des Wälzlagers 28 muss dieses vorzugsweise nicht in einer bestimmten Drehorientierung in Bezug auf den Lagersitz 46 montiert werden. Sofern ein Umfangsnut-Tangentialsicherungsmerkmal bei der Montage noch nicht mit einem Axialsicherungsring-Tangentialsicherungsmerkmal in Eingriff treten kann, da diese Merkmale in Umfangsrichtung aufgrund der beliebigen Drehorientierung versetzt zueinander liegen, erfolgt das Einrichten der Tangentialsicherung spätestens dann, wenn der Außenring 32 sich gegenüber dem Gehäuseabschnitt 22 verdreht. Dies kann allenfalls bis zu maximal einer Umdrehung um 360° erfolgen, da dann spätestens die Tangentialsicherungsmerkmale miteinander in Eingriff treten und folglich für eine Verdrehsicherung sorgen.

Nachstehend wird eine weitere Ausführungsform eines Wälzlagers bzw. einer Wälzlageranordnung dargestellt, und zwar anhand der Fig. 2 bis 6, wobei die nachstehende Ausführungsform hinsichtlich Aufbau und Funktionsweise generell der Wälzlageranordnung 30 der Fig. 1 entspricht. Gleiche Elemente sind daher durch gleiche Bezugszeichen gekennzeichnet. Im Folgenden werden im Wesentlichen die Unterschiede bzw. Details hiervon erläutert.

In Fig. 2 ist der Axialsicherungsring 50 dargestellt. Wie erläutert, handelt es sich um einen offenen Ring mit einem Ringabschnitt 70, der sich über einen Winkel von weniger als 360° erstreckt. Die Ringenden 72 des Ringabschnittes 70 sind symmetrisch zu einer nicht näher bezeichneten Ringöffnungsachse angeordnet und von dieser Achse jeweils um einen Winkel 71 beabstandet. Der Ringabschnitt 70 erstreckt sich folglich über einen Winkel von 360° - 2 x Winkel 71, vorliegend etwa 360° - 2 x 10° = 340°.

An den Ringenden 72 sind jeweilige Radialvorsprünge 58a, 58b ausgebildet, die sich etwa in Radialrichtung erstrecken und dazu dienen können, den Axialsicherungsring 50 zu spreizen.

Der Axialsicherungsring 50 weist ferner vorliegend ein erstes Axialsicherungsring-Tangentialsicherungsmerkmal in Form einer Radialvertiefung 74a an dem Innenumfang des Ringabschnittes 70 auf. Das erste Axialsicherungsring-Tangentialsicherungsmerkmal 74a ist dabei um einen Abstandswinkel 76 von dem Ringende 72 beabstandet, der kleiner ist als 30°, insbesondere kleiner als 20°, vorzugsweise kleiner als 12°. Die Radialvertiefung 74a erstreckt sich dabei über einen Tangentialsicherungsmerkmal-Winkel 78, der kleiner ist als 45°, insbesondere kleiner ist als 15°, vorzugsweise kleiner als 10° und vorliegend etwa kleiner ist als 5°, und vorzugsweise größer ist als 1°.

Symmetrisch zu der Öffnungsachse des Axialsicherungsringes 50 ist im Bereich des gegenüberliegenden Ringendes 72 ein entsprechendes Axialsicherungsring-Tangentialsicherungsmerkmal in Form einer Radialvertiefung 74b ausgebildet.

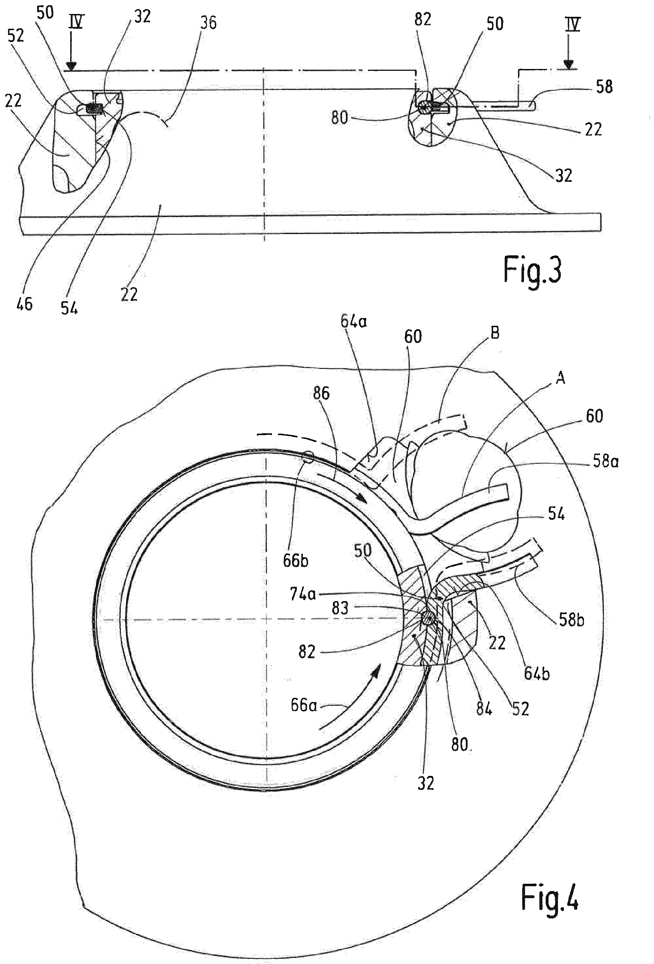

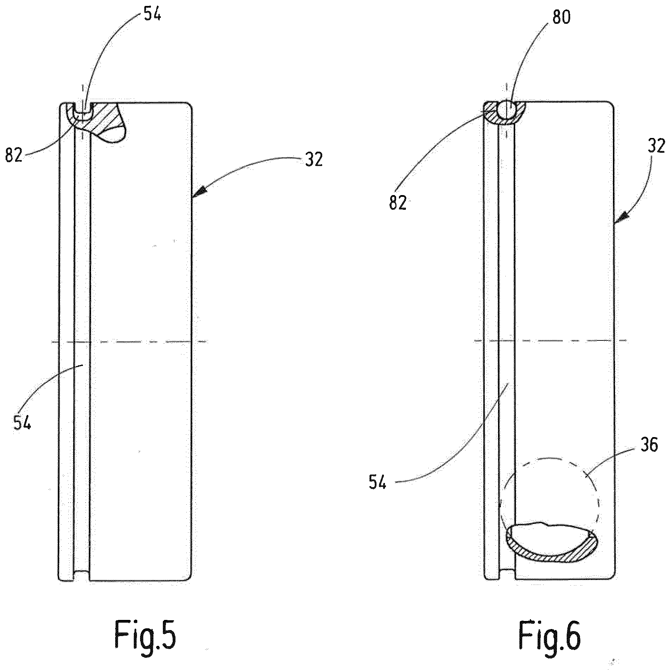

Wie es insbesondere in Fig. 4 und in den Fig. 5 und 6 zu erkennen ist, weist ein Umfangsnut-Tangentialsicherungsmerkmal eine Tangentialsicherungs-Vertiefung 82 am Boden der Umfangsnut 54 auf, in die ein Tangentialsicherungselement 80 eingesetzt ist, das vorliegend als Kugel ausgebildet ist.

Das Tangentialsicherungselement 80 beinhaltet dabei einen Verankerungsabschnitt 83, der in der Tangentialsicherungs-Vertiefung 82 aufgenommen ist, und einen Sicherungsabschnitt 84, der gegenüber dem Boden der Umfangsnut 54 vorsteht, jedoch nicht über den äußeren Umfangsrand der Umfangsnut 54 hinaus.

Der Sicherungsabschnitt 84 greift zum Einrichten der Tangentialsicherung 66 in die zugeordnete Radialvertiefung (in Fig. 4 greift ein Sicherungsabschnitt 84 in die Radialvertiefung 74a), um auf diese Weise eine Tangentialsicherung 66a einzurichten. Im Bereich des anderen Ringendes kann eine entsprechende Tangentialsicherung 66b eingerichtet sein, die spiegelsymmetrisch zu der Tangentialsicherung 66a ausgebildet sein kann, was in Fig. 4 jedoch nicht näher dargestellt ist.

In Fig. 4 ist zu erkennen, dass aufgrund einer bevorzugten Drehrichtung 86 der Welle 26 der Außenring 32 aufgrund von Reibung in der gleichen Richtung mitgenommen werden möchte, was zu einem Umfangskriechen in Bezug auf den Gehäuseabschnitt 22 führen könnte, wenn keine Tangentialsicherungsmerkmale vorhanden wären. Vorliegend sorgen die Tangentialsicherungen 66a, 66b dafür, dass der Außenring 32 in Umfangsrichtung 86 im Wesentlichen formschlüssig mit dem Axialsicherungsring 50 gekoppelt ist, der aufgrund der bevorzugten Drehrichtung 86 mit seinem Radialvorsprung 58b an einem zugeordneten Anschlag 64b des Gehäuseabschnittes 22 anschlägt. Da sich folglich der Axialsicherungsring 50 nicht in der bevorzugten Drehrichtung 86 gegenüber dem Gehäuseabschnitt 22 verdrehen kann, wird auf diese Weise auch eine Verdrehsicherung zwischen Außenring 32 und Gehäuseabschnitt 22 eingerichtet.

Wenn bei der Montage des Außenringes 32 in dem Lagersitz 46 das wenigstens eine Tangentialsicherungselement 80 nicht mit der Radialvertiefung 74a und/oder 74b des in die Lagersitznut 52 eingesetzten Axialsicherungsringes 50 ausgerichtet ist, bleibt der Axialsicherungsring im Bereich des Tangentialsicherungselementes 80 gespreizt, wenn die Umfangsnut 54 mit der Lagersitznut 52 ausgerichtet ist. Da sich das Tangentialsicherungselement 80 bzw. die Tangentialsicherungselemente 80 nur über einen relativ geringen Winkelbereich erstrecken, greift der Axialsicherungsring 50 jedoch mit einem verbleibenden Umfangsabschnitt dann in die Umfangsnut 54 ein, um auf diese Weise die Axialsicherungsfunktion zu erfüllen. Erst dann, wenn sich der Außenring 32 in Bezug auf den Gehäuseabschnitt 22 verdreht, richtet sich das Tangentialsicherungselement 80 in Umfangsrichtung irgendwann mit der zugeordneten Radialvertiefung 74a, 74b aus und greift in diese ein, da der Axialsicherungsring 50 in Umfangsrichtung über den zugeordneten Anschlag (z.B. 64b) in Umfangsrichtung gehalten wird.

Folglich kann die Wälzlageranordnung nach der Montage zum einen die Axialsicherungsfunktion erfüllen, kann jedoch auch, sobald sich das Ringelement (wie der Außenring 32) gegenüber dem Gehäuseabschnitt 22 verdreht hat, auch die Tangentialsicherungsfunktion erfüllen.

Das Tangentialsicherungselement 80 greift in der Sicherungsstellung so weit in die zugeordnete Radialvertiefung 74a, 74b ein, dass in Tangential- bzw. Umfangsrichtung ein Formschluss eingerichtet wird, der erst wieder aufgelöst werden kann, wenn der Axialsicherungsring 50 gespreizt wird, beispielsweise durch Zugriff über die Montageöffnung 60 (siehe Fig. 4) auf einen oder beide Radialvorsprünge 58a, 58b.

## Patentansprüche

1. Wälzlager (28) mit
- einem ersten Ringelement (32);
- einem konzentrisch zu dem ersten Ringelement (32) angeordneten zweiten Ringelement (34);
- einer Mehrzahl von zwischen dem ersten und dem zweiten Ringelement (32, 34) angeordneten Wälzkörpern (36);
wobei wenigstens eines (32) der Ringelemente (32, 34) eine Umfangsnut (54) zur Aufnahme eines Axialsicherungsringes (50) aufweist;
wobei ein Umfangsnut-Tangentialsicherungsmerkmal (80, 82) im Bereich der Umfangsnut (54) angeordnet und dazu ausgebildet ist, mit einem Axialsicherungsring-Tangentialsicherungsmerkmal (74a, 74b) des in die Umfangsnut (54) eingesetzten Axialsicherungsringes (50) in Eingriff zu treten, um das eine Ringelement (32) in Umfangsrichtung (86) gegenüber dem Axialsicherungsring (50) zu sichern, wobei das Umfangsnut-Tangentialsicherungsmerkmal (80, 82) wenigstens ein Tangentialsicherungselement (80) aufweist, das einen Verankerungsabschnitt (83) aufweist, der in eine Tangentialsicherungs-Vertiefung (82) greift,
**dadurch gekennzeichnet, dass** das Tangentialsicherungselement (80) einen Sicherungsabschnitt (84) aufweist, der dazu ausgebildet ist, in eine Radialvertiefung (74a, 74b) des in die Umfangsnut (54) eingesetzten Axialsicherungsringes (50) einzugreifen.

2. Wälzlageranordnung (30), mit
- einem Wälzlager (28) nach Anspruch 1, und
- einem Axialsicherungsring (50), der in einer Sicherungsstellung (A) in die Umfangsnut (54) des einen Ringelementes (32) eingesetzt ist und ein Axialsicherungsring-Tangentialsicherungsmerkmal (74a, 74b) aufweist, das in der Sicherungsstellung (A) mit dem Umfangsnut-Tangentialsicherungsmerkmal (80, 82) in Eingriff tritt,
wobei der Axialsicherungsring (50) ein offener Ring ist, der aus der Sicherungsstellung (A) in eine Spreizstellung (B) spreizbar ist,
**dadurch gekennzeichnet, dass** der Axialsicherungsring (50) ein Axialsicherungsring-Tangentialsicherungsmerkmal (74a, 74b) in Form wenigstens einer Radialvertiefung (74a, 74b) aufweist, in die ein Sicherungsabschnitt (84) eines Tangentialsicherungselementes (80) greift, wenn der Axialsicherungsring (50) in die Umfangsnut (54) eingesetzt ist.

3. Wälzlageranordnung nach Anspruch 2, **dadurch gekennzeichnet, dass** das Axialsicherungsring-Tangentialsicherungsmerkmal (74a, 74b) des Axialsicherungsringes (50) in der Spreizstellung (B) außer Eingriff mit dem Umfangsnut-Tangentialsicherungsmerkmal (80, 82) ist.

4. Wälzlageranordnung nach einem der Ansprüche 2 oder 3, **dadurch gekennzeichnet, dass** der Axialsicherungsring (50) an seinen Umfangsenden (72) Radialvorsprünge (58a, 58b) aufweist.

5. Wälzlageranordnung nach Anspruch 4, **dadurch gekennzeichnet, dass** das Axialsicherungsring-Tangentialsicherungsmerkmal (74a, 74b) in Umfangsrichtung (86) von einem der Umfangsenden (72) um einen Abstandswinkel (76) beabstandet ist, der kleiner ist als 30°.

6. Wälzlageranordnung nach einem der Ansprüche 2 bis 5, **dadurch gekennzeichnet, dass** das eine Ringelement (32), an dem die Umfangsnut (54) ausgebildet ist, in einen Lagersitz (46) eines Gehäuseabschnittes (22) axial eingeschoben ist, wobei der Axialsicherungsring (50) in der Sicherungsstellung (A) radial in eine Lagersitznut (52) greift, die als Radialnut an dem Lagersitz (46) ausgebildet ist.

7. Wälzlageranordnung nach Anspruch 6, **dadurch gekennzeichnet, dass** der Axialsicherungsring (50) wenigstens einen Radialvorsprung (58) aufweist, der in eine Montageöffnung (60) des Gehäuseabschnittes (22) ragt und innerhalb der Montageöffnung (60) begrenzt tangential bewegbar ist.

8. Verfahren zum Montieren einer Wälzlageranordnung (30) nach einem der Ansprüche 2 bis 7, mit den Schritten:
- Montieren eines Axialsicherungsringes (50), der ein Axialsicherungsring-Tangentialsicherungsmerkmal (74a, 74b) aufweist, in einer Lagersitznut (52) eines Lagersitzes (46) eines Gehäuseabschnittes (22);
- Montieren eines Wälzlagers nach Anspruch 1 an dem Lagersitz, indem der Axialsicherungsring (50) gespreizt wird und das eine Ringelement (32), an dem die Umfangsnut (54) ausgebildet ist, in oder auf den Lagersitz (46) eingeschoben wird, bis die Umfangsnut (54) mit dem Axialsicherungsring (50) ausgerichtet ist, und indem der Axialsicherungsring (50) anschließend entspreizt wird, so dass er in die Umfangsnut (54) greift,
wobei ein Umfangsnut-Tangentialsicherungsmerkmal (80, 82) im Bereich der Umfangsnut (54) mit dem Axialsicherungsring-Tangentialsicherungsmerkmal (74a, 74b) des in die Umfangsnut (54) eingreifenden Axialsicherungsringes (50) in Eingriff tritt, um das eine Ringelement (32) in Umfangsrichtung (86) gegenüber dem Axialsicherungsring (50) zu sichern.

## Claims

1. Rolling bearing (28) having
- a first ring element (32);
- a second ring element (34) which is arranged concentrically with respect to the first ring element (32);
- a plurality of rolling bodies (36) which are arranged between the first and the second ring element (32, 34);
at least one (32) of the ring elements (32, 34) having a circumferential groove (54) for receiving an axial securing ring (50);
a circumferential groove tangential securing feature (80, 82) being arranged in the region of the circumferential groove (54) and being configured to enter into engagement with an axial securing ring tangential securing feature (74a, 74b) of the axial securing ring (50) which is inserted into the circumferential groove (54), in order to secure the one ring element (32) in the circumferential direction (86) with respect to the axial securing ring (50), the circumferential groove tangential securing feature (80, 82) having at least one tangential securing element (80) which has an anchoring section (83) which engages into a tangential securing depression (82), **characterized in that** the tangential securing element (80) has a securing section (84) which is configured to engage into a radial depression (74a, 74b) of the axial securing ring (50) which is inserted into the circumferential groove (54).

2. Rolling bearing assembly (30), having
- a rolling bearing (28) according to Claim 1, and
- an axial securing ring (50) which is inserted in a securing position (A) into the circumferential groove (54) of the one ring element (32) and has an axial securing ring tangential securing feature (74a, 74b) which enters into engagement with the circumferential groove tangential securing feature (80, 82) in the securing position (A),
the axial securing ring (50) being an open ring which can be spread out of the securing position (A) into a spread position (B),
**characterized in that** the axial securing ring (50) has an axial securing ring tangential securing feature (74a, 74b) in the form of at least one radial depression (74a, 74b), into which a securing section (84) of a tangential securing element (80) engages when the axial securing ring (50) is inserted into the circumferential groove (54).

3. Rolling bearing assembly according to Claim 2, **characterized in that** the axial securing ring tangential securing feature (74a, 74b) of the axial securing ring (50) is out of engagement with the circumferential groove tangential securing feature (80, 82) in the spread position (B).

4. Rolling bearing assembly according to either of Claims 2 and 3, **characterized in that** the axial securing ring (50) has radial projections (58a, 58b) at its circumferential ends (72).

5. Rolling bearing assembly according to Claim 4, **characterized in that** the axial securing ring tangential securing feature (74a, 74b) is spaced apart in the circumferential direction (86) from one of the circumferential ends (72) by a spacing angle (76) which is smaller than 30°.

6. Rolling bearing assembly according to one of Claims 2 to 5, **characterized in that** the one ring element (32), on which the circumferential groove (54) is configured, is pushed axially into a bearing seat (46) of a housing section (22), the axial securing ring (50) engaging, in the securing position (A), radially into a bearing seat groove (52) which is configured as a radial groove on the bearing seat (46).

7. Rolling bearing assembly according to Claim 6, **characterized in that** the axial securing ring (50) has at least one radial projection (58) which protrudes into a mounting opening (60) of the housing section (22) and can be moved tangentially to a limited extent within the mounting opening (60).

8. Method for mounting a rolling bearing assembly (30) according to one of Claims 2 to 7, having the steps:
- mounting of an axial securing ring (50) which has an axial securing ring tangential securing feature (74a, 74b) in a bearing seat groove (52) of a bearing seat (46) of a housing section (22);
- mounting of a rolling bearing according to Claim 1 on the bearing seat, by the axial securing ring (50) being spread and the one ring element (32), on which the circumferential groove (54) is configured, being pushed into or onto the bearing seat (46), until the circumferential groove (54) is aligned with the axial securing ring (50), and by the axial securing ring (50) subsequently being despread, with the result that it engages into the circumferential groove (54),
a circumferential groove tangential securing feature (80, 82) entering in the region of the circumferential groove (54) into engagement with the axial securing ring tangential securing feature (74a, 74b) of the axial securing ring (50) which engages into the circumferential groove (54), in order to secure the one ring element (32) in the circumferential direction (86) with respect to the axial securing ring (50).

## Revendications

1. Palier à roulement (28) comprenant :
- un premier élément de bague (32) ;
- un deuxième élément de bague (34) disposé de manière concentrique par rapport au premier élément de bague (32) ;
- une pluralité de corps de roulement (36) disposés entre le premier et le deuxième élément de bague (32, 34) ;
au moins l'un (32) des éléments de bague (32, 34) présentant une rainure périphérique (54) pour recevoir une bague de fixation axiale (50) ;
une caractéristique de fixation tangentielle de rainure périphérique (80, 82) étant disposée dans la région de la rainure périphérique (54) et étant réalisée de manière à entrer en prise avec une caractéristique de fixation tangentielle de bague de fixation axiale (74a, 74b) de la bague de fixation axiale (50) insérée dans la rainure périphérique (54), afin de fixer l'un des éléments de bague (32) dans la direction périphérique (86) par rapport à la bague de fixation axiale (50), la caractéristique de fixation tangentielle de rainure périphérique (80, 82) présentant au moins un élément de fixation tangentielle (80) qui présente une portion d'ancrage (83) qui s'engage dans un renfoncement de fixation tangentielle (82),
**caractérisé en ce que** l'élément de fixation tangentielle (80) présente une portion de fixation (84) qui est réalisée de manière à s'engager dans un renfoncement radial (74a, 74b) de la bague de fixation axiale (50) insérée dans la rainure périphérique (54).

2. Système de palier à roulement (30), comprenant
- un palier à roulement (28) selon la revendication 1, et
- une bague de fixation axiale (50) qui est insérée dans une position de fixation (A) dans la rainure périphérique (54) de l'un des éléments de bague (32) et présente une caractéristique de fixation tangentielle de bague de fixation axiale (74a, 74b) qui vient en prise dans la position de fixation (A) avec la caractéristique de fixation tangentielle de rainure périphérique (80, 82),
la bague de fixation axiale (50) étant une bague ouverte qui peut être écartée depuis la position de fixation (A) dans une position d'écartement (B), **caractérisé en ce que** la bague de fixation axiale (50) présente une caractéristique de fixation tangentielle de bague de fixation axiale (74a, 74b) sous la forme d'au moins un renfoncement radial (74a, 74b) dans lequel s'engage une portion de fixation (84) d'un élément de fixation tangentielle (80), lorsque la bague de fixation axiale (50) est insérée dans la rainure périphérique (54).

3. Système de palier à roulement selon la revendication 2, **caractérisé en ce que** la caractéristique de fixation tangentielle de bague de fixation axiale (74a, 74b) de la bague de fixation axiale (50), dans la position d'écartement (B), est désengagée de la caractéristique de fixation tangentielle de rainure périphérique (80, 82).

4. Système de palier à roulement selon l'une quelconque des revendications 2 ou 3, **caractérisé en ce que** la bague de fixation axiale (50) présente, au niveau de ses extrémités périphériques (72), des saillies radiales (58a, 58b).

5. Système de palier à roulement selon la revendication 4, **caractérisé en ce que** la caractéristique de fixation tangentielle de bague de fixation axiale (74a, 74b) est espacée dans la direction périphérique (86) de l'une des extrémités périphériques (72) suivant un angle d'espacement (76) inférieur à 30°.

6. Système de palier à roulement selon l'une quelconque des revendications 2 à 5, **caractérisé en ce que** l'un des éléments de bague (32) au niveau duquel est réalisée la rainure périphérique (54) est enfoncé axialement dans un siège de palier (46) d'une portion de boîtier (22), la bague de fixation axiale (50), dans la position de fixation (A), s'engageant radialement dans une rainure de siège de palier (52) qui est réalisée sous forme de rainure radiale au niveau du siège de palier (46).

7. Système de palier à roulement selon la revendication 6, **caractérisé en ce que** la bague de fixation axiale (50) présente au moins une saillie radiale (58) qui pénètre dans une ouverture de montage (60) de la portion de boîtier (22) et qui peut être déplacée tangentiellement dans une mesure limitée à l'intérieur de l'ouverture de montage (60).

8. Procédé de montage d'un système de palier à roulement (30) selon l'une quelconque des revendications 2 à 7, comprenant les étapes suivantes :
- montage d'une bague de fixation axiale (50) qui présente une caractéristique de fixation tangentielle de bague de fixation axiale (74a, 74b), dans une rainure de siège de palier (52) d'un siège de palier (46) d'une portion de boîtier (22) ;
- montage d'un palier à roulement selon la revendication 1 sur le siège de palier, en écartant la bague de fixation axiale (50) et en enfonçant l'un des éléments de bague (32) au niveau duquel est réalisée la rainure périphérique (54) dans ou sur le siège de palier (46) jusqu'à ce que la rainure périphérique (54) soit en alignement avec la bague de fixation axiale (50), et en écartant ensuite la bague de fixation axiale (50) de telle sorte qu'elle s'engage dans la rainure périphérique (54),
une caractéristique de fixation tangentielle de rainure périphérique (80, 82) dans la région de la rainure périphérique (54) venant en prise avec la caractéristique de fixation tangentielle de bague de fixation axiale (74a, 74b) de la bague de fixation axiale (50) s'engageant dans la rainure périphérique (54) afin de fixer l'un des éléments de bague (32) dans la direction périphérique (86) par rapport à la bague de fixation axiale (50).
